# DEMANDE DE BREVET EUROPEEN

(11) **EP 4 068 680 A1**
(43) Date de publication de la demande: **05.10.2022**
(21) Numéro de dépôt: 22164863.7
(22) Date de dépôt: 28.03.2022
(51) Int. Cl.: H04L 9/08, H04L 9/14, G06F 21/57

(54) **STOCKAGE SÉCURISÉ DE CLEFS DE CHIFFREMENT**

(30) Priorité: 31.03.2021 FR 2103316
(71) Demandeur: STMicroelectronics (ALPS) SAS, 38000 Grenoble (FR); STMicroelectronics (Grand Ouest) SAS, 72100 Le Mans (FR)
(72) Inventeur: ALBESA, Franck, 72250 PARIGNE L'EVEQUE (FR); ANQUET, Nicolas, 38000 GRENOBLE (FR)
(74) Mandataire: Cabinet Beaumont

(57) **Abrégé**

La présente description concerne un procédé de réalisation d'une opération cryptographique, le procédé comprenant :
- la génération d'une première valeur de comptage par un compteur monotone (204) d'un dispositif de traitement (202);
- la transmission par le compteur monotone de la première valeur de comptage à une mémoire (104) du dispositif de traitement ;
- la sélection d'une première clef de chiffrement dans la mémoire sur la base de la première valeur de comptage ; et
- la mise à disposition de la première clef de chiffrement sélectionnée à un processeur cryptographique (102).

## Description

### Domaine technique

La présente description concerne le domaine des procédés et dispositifs pour la sécurité de circuits électroniques, et en particulier un dispositif et un procédé permettant l'utilisation sécurisée de clefs de chiffrement.

### Technique antérieure

Certains dispositifs de traitement comprennent des processeurs cryptographiques nécessitant l'utilisation de clefs de chiffrement qui ne sont pas accessibles par l'extérieur du dispositif.

Par exemple, le fonctionnement d'un dispositif de traitement est assuré par l'exécution de codes, stockés dans une mémoire non volatile du dispositif, utilisés dans la vie du circuit. Pour des raisons de sécurité, certains codes sont stockés de façon cryptées, et des clefs de chiffrement peuvent être chargées afin de déchiffrer ces codes.

Il existe un besoin récurrent d'améliorer la sécurité du stockage de telles clefs de chiffrement.

### Résumé de l'invention

Un mode de réalisation répond au moins partiellement à des besoins du domaine technique.

Un mode de réalisation prévoit un procédé de réalisation d'une opération cryptographique, le procédé comprenant :
- la génération d'une première valeur de comptage par un compteur monotone d'un dispositif de traitement ;
- la transmission par le compteur monotone de la première valeur de comptage à une mémoire du dispositif de traitement ;
- la sélection d'une première clef de chiffrement dans la mémoire sur la base de la première valeur de comptage ; et
- la mise à disposition de la première clef de chiffrement sélectionnée à un processeur cryptographique.

Selon un mode de réalisation, la sélection de la première clef de chiffrement est réalisée par une interface de sélection configurée pour empêcher l'accès à une ou plusieurs autres clefs de chiffrement stockées dans la mémoire en association avec d'autres valeurs de comptage du compteur monotone.

Selon un mode de réalisation, la première clef de chiffrement est sélectionnée en outre par un premier index.

Selon un mode de réalisation, le procédé comprend en outre :
- la génération d'une deuxième valeur de comptage par le compteur monotone du dispositif de traitement ;
- la transmission par le compteur monotone de la deuxième valeur de comptage à la mémoire du dispositif de traitement ;
- la sélection d'une deuxième clef de chiffrement dans la mémoire sur la base de la deuxième valeur de comptage et du premier index ; et
- la mise à disposition de la deuxième clef de chiffrement sélectionnée au processeur cryptographique.

Selon un mode de réalisation, la mémoire est configurée de sorte que l'accès à la première clef de chiffrement ne soit pas autorisé sur la base d'une valeur de comptage supérieure à la première valeur de comptage.

Selon un mode de réalisation, la mise à disposition de la première clef de chiffrement au processeur cryptographique est effectuée, sur la base d'une condition de stockage de la première clef de chiffrement, soit par le biais d'un bus entre la mémoire et le processeur cryptographique, soit par le biais d'un registre lisible par un processeur du dispositif de traitement.

Selon un mode de réalisation, la condition de stockage est le fait que la première clef de chiffrement est stockée dans une première plage d'adresse.

Selon un mode de réalisation, la condition de stockage est le fait que la première clef de chiffrement est stockée dans la mémoire en association avec une première valeur.

Selon un mode de réalisation, le bus est un bus dédié à la transmission des clefs de chiffrement entre la mémoire et le processeur cryptographique.

Selon un mode de réalisation, le procédé comprend en outre :
- la sélection d'une troisième clef de chiffrement dans la mémoire sur la base de la première valeur de comptage et d'un deuxième index ; et
- la mise à disposition de la troisième clef de chiffrement sélectionnée au processeur cryptographique.

Selon un mode de réalisation, le compteur monotone est initialisé à la première valeur de comptage lors d'un premier démarrage du dispositif de traitement, le procédé comprenant en outre, l'initialisation du compteur monotone à la deuxième valeur de comptage lors d'un deuxième démarrage du dispositif de traitement.

Selon un mode de réalisation, le procédé comprend un autre démarrage du dispositif de traitement lors duquel le compteur monotone est initialisé à la première valeur de comptage si une condition d'état du dispositif est satisfaite.

Selon un mode de réalisation, la condition d'état correspond à l'état de programmation d'une zone de la mémoire.

Un mode de réalisation prévoit un dispositif de traitement de données comprenant :
- un compteur monotone configuré pour générer une première valeur de comptage ; et
- une mémoire comprenant une interface de sélection, l'interface de sélection étant configurée pour :
- sélectionner une première clef de chiffrement mémorisée dans la mémoire sur la base de la première valeur de comptage ; et
- mettre à disposition la première clef de chiffrement sélectionnée à un processeur cryptographique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un procédé de déchiffrement de données sur la base de clefs de chiffrement selon un mode de réalisation de la présente description ;
la figure 2A représente, de façon très schématique et sous forme de blocs, un dispositif électronique selon un mode de réalisation de la présente description ;
la figure 2B représente un exemple de réalisation d'une mémoire de stockage de clefs de façon sécurisée ;
la figure 3 est un organigramme représentant des opérations d'un procédé de sélection de clefs, et de transmission de ces clefs vers un processeur cryptographique, selon un exemple de réalisation de la présente description ;
la figure 4 illustre un système de déchiffrement de données chiffrées stockées dans une mémoire selon un exemple de réalisation de la présente description ;
la figure 5 représente des données et codes accessibles lors d'un démarrage sécurisé selon un mode de réalisation de la présente description ;
la figure 6 est un organigramme représentant des opérations d'un procédé de démarrage sécurisé d'un dispositif de traitement selon un exemple de réalisation de la présente description ; et
la figure 7 est un organigramme représentant des opérations d'un procédé de démarrage sécurisé d'un dispositif de traitement selon un autre exemple de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains composants n'ont pas été décrits dans la suite.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

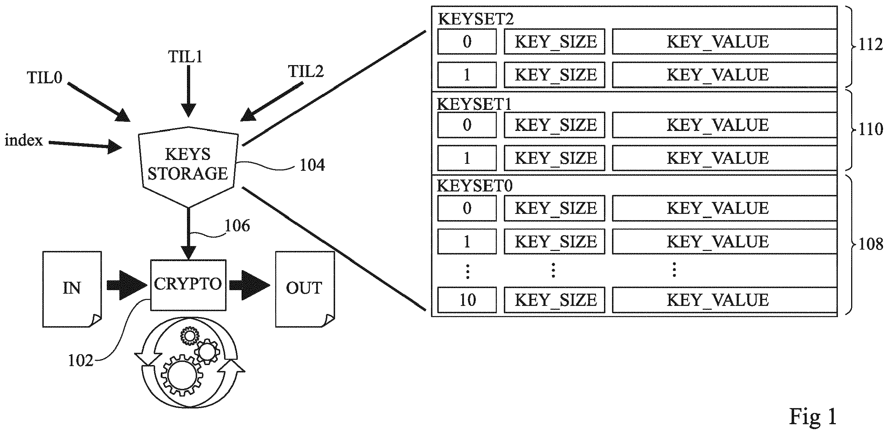

La figure 1 représente, de façon très schématique, un procédé de déchiffrement de données sur la base de clefs de chiffrement selon un mode de réalisation de la présente description.

Des données d'entrée (IN), comprenant par exemple des codes chiffrés, sont fournies à un processeur cryptographique 102 (CRYPTO) d'un dispositif de traitement (non illustré en figure 1). Par exemple, un processeur générique (également non illustré en figure 1) du dispositif de traitement ordonne l'exécution d'un code, par exemple un code de démarrage. Le processeur cryptographique 102 est configuré pour déchiffrer les données d'entrée en utilisant des clefs de chiffrement, et pour fournir, à une sortie du processeur cryptographique 102, des données déchiffrées (OUT).

Les clefs de chiffrement sont stockées dans une mémoire non volatile 104 (KEY STORAGE), chaque clef étant stockée, par exemple, en association avec un niveau d'isolation (temporal isolation level) (TIL). Par exemple, la mémoire 104 stocke plusieurs ensembles de clefs, et chaque ensemble de clefs est associé à un niveau d'isolation correspondant. Une valeur de niveau TIL est fournie à la mémoire 104 et permet, par exemple, de sélectionner une ou plusieurs clefs de l'ensemble de clefs associé au niveau d'isolement correspondant à la valeur de niveau TIL. Dans certains cas, la mémoire 104 reçoit en outre une valeur d'index permettant la sélection d'une clef donnée dans chaque ensemble de clefs.

La valeur de TIL correspond à une valeur de comptage générée par un compteur monotone (non illustré en figure 1) et les clefs associées à une valeur de niveau TIL sont, par exemple, uniquement accessibles lorsque la valeur de comptage générée par le compteur monotone est égale à la valeur de niveau TIL.

Un exemple du contenu de la mémoire 104 est illustré dans la partie droite de la figure 1. Dans cet exemple, la mémoire non volatile 104 comprend une première zone 108 (KEYSET0) dans laquelle est stocké un premier ensemble de clefs. La mémoire comprend en outre une deuxième zone 110 (KEYSET1), dans laquelle est stocké un deuxième ensemble de clefs, ainsi qu'une troisième zone 112 (KEYSET2) dans laquelle est stocké un troisième ensemble de clefs. Les premier, deuxième et troisième ensembles de clefs sont par exemple associés à trois niveaux d'isolement différents. Le premier ensemble de clefs est par exemple associés au niveau TIL0, le deuxième ensemble de clefs au niveau TIL1 et le troisième ensemble de clefs au niveau TIL2.

Dans la mémoire 104, chaque clef est par exemple représentée par une valeur de clef (KEY_VALUE), et est associée à une valeur d'index ainsi qu'à une valeur de taille (KEY _SIZE) indiquant par exemple la longueur en bits de la clef.

Dans l'exemple illustré à droite de la figure 1, la zone 108 contient onze clefs de chiffrement associées au niveau TIL 0. Ces clefs sont en outre chacune identifiées par un index allant de 0 à 10. La zone 110 contient deux clefs de chiffrement associées au niveau TIL 1 et identifiées par des index 0 et 1. La zone 112 contient deux clefs de chiffrement associées au niveau TIL 2 et identifiées par des index 0 et 1. Ainsi, pour certaines valeurs d'index (les valeurs 0 et 1 dans cet exemple), la clef sélectionnée dépend de la valeur de niveau TIL. La liste de clefs illustrée dans la figure 1 n'est qu'un exemple, et dans d'autres modes de réalisation, il pourrait y avoir un autre nombre d'ensembles de clefs et un autre nombre de clefs dans chaque ensemble. De plus, certains champs associés à chaque clef, comme l'index et/ou la valeur de taille, pourraient être omis.

Lors de la sélection d'une clef de la mémoire 104 pour déchiffrement d'une ou plusieurs données chiffrées d'entrée, une valeur de comptage correspondant à un niveau d'isolation (TIL0, TIL1 ou TIL2) est transmise à la mémoire 104, ainsi que l'index (index) de la clef voulue. La clef correspondante à ce niveau d'isolation et à cet index est ensuite transmise au processeur cryptographique 102, par exemple par l'intermédiaire d'un bus dédié 106. Le bus dédié 106 relie, par exemple, exclusivement la mémoire 104 au processeur cryptographique 102.

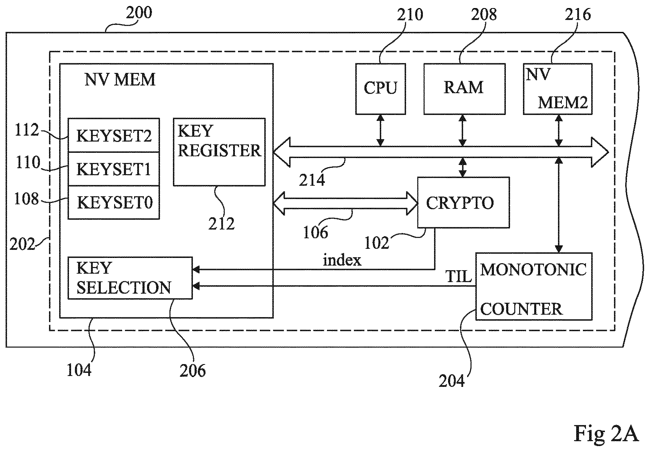

La figure 2A représente, de façon très schématique et sous forme de blocs, un mode de réalisation d'un dispositif électronique 200 comprenant un dispositif de traitement 202.

Le dispositif électronique 200 est par exemple une carte électronique telle qu'une carte à microcircuits, un matériel à usage informatique, un circuit à microprocesseur, etc.

Le dispositif de traitement 202 comprend par exemple le processeur cryptographique 102 (CRYPTO) et la mémoire non volatile 104 (NV MEM) décrits ci-dessus en relation avec la figure 1. Cette mémoire 104 est par exemple réalisée par une mémoire flash, bien que d'autres types de mémoire non volatile pourraient être utilisés. La mémoire 104 comprend, par exemple, les première, deuxième et troisième zones 108, 110 et 112 (KEYSET0, KEYSET1 et KEYSET2) décrites en relation avec la figure 1. La mémoire 104 comprend également, par exemple, une interface de sélection 206 (KEY SELECTION). Cette interface 206 est couplée à la sortie d'un compteur monotone 204 (MONOTONIC COUNTER) et reçoit la valeur du niveau TIL de ce compteur. L'interface 206 est par exemple couplée en outre à une sortie du processeur cryptographique 102 et reçoit de cette sortie la valeur index. Par exemple, la valeur d'index est stockée dans un registre (non illustré) contenu dans le processeur cryptographique 102, bien que ce registre pourrait être ailleurs dans le dispositif 202.

Les compteurs monotones sont connus dans l'état de la technique, un exemple d'un tel compteur étant décrit dans la publication "Virtual Monotonic Counters and Count-Limited Objects using a TPM without a Trusted OS" de L.F.G. Sarmenta, M. Van Dijk, C.W. O'Donnell, J. Rhodes et S. Devadas, et en particulier dans la partie 3 de ce document. Ce document décrit des réalisations de compteur mis en œuvre sous forme matérielle et/ou en logicielle. Le compteur monotone 204 est par exemple mis en œuvre de façon matérielle par un circuit numérique, tel qu'un circuit intégré personnalisé (ASIC, de l'anglais "Application Specific Integrated Circuit"). Le compteur monotone est configuré pour maintenir une valeur de comptage, accessible sur une sortie du compteur. Suite à une commande d'incrémentation, le compteur monotone augmente d'une ou plusieurs unités sa valeur de comptage mais, suite à chaque incrémentation, l'opération n'est pas réversible. En effet, le compteur monotone est configuré pour que sa valeur de comptage ne décroisse jamais. De plus, entre deux incrémentations, la valeur de comptage est par exemple protégée contre toute modification, pour qu'elle ne puisse pas être effacée ni changée. Seule la commande d'incrémentation permet le remplacement de la valeur actuelle par une nouvelle valeur supérieure à la valeur actuelle.

Le compteur monotone 204 est configuré de sorte qu'aucune commande, mise à part une remise à zéro du dispositif de traitement, ne permette de revenir à la valeur précédente une fois la commande d'incrémentation exécutée. Dans le cas où la valeur de comptage est stockée de manière volatile, chaque mise hors alimentation du dispositif de traitement engendre la perte de la valeur de comptage et à chaque remise sous tension du dispositif, le compteur monotone génère à nouveau une valeur de comptage initiale. Dans le cas où la valeur de comptage est stockée dans un élément de mémorisation non volatile, à chaque redémarrage, une valeur de comptage initiale est par exemple réécrite dans l'élément de mémorisation non volatile du compteur monotone.

Le dispositif de traitement 202 comprend en outre un processeur générique 210 (CPU) non sécurisé. Par exemple, le processeur générique 210 est couplé par l'intermédiaire d'un bus 214 au compteur monotone 204 ainsi qu'à une mémoire non volatile (NV MEM2) 216 et à la mémoire non volatile 104. Les mémoires 104 et 216 sont par exemple de type flash. Dans un exemple, le processeur générique 210 provisionne la valeur d'index dans le registre (non illustré) du processeur cryptographique 102, d'où elle est transmise à l'interface de sélection 206.

Le processeur générique 210 est en outre couplé par l'intermédiaire du bus 214 au processeur cryptographique 102 ainsi qu'à une mémoire RAM (mémoire à accès aléatoire) 208.

La mémoire 104 comprend, dans certains cas, un registre 212 (KEY REGISTER) accessible par le bus 214.

Le processeur cryptographique 102 est par exemple relié par un bus dédié 106 à la mémoire 104. Le bus 106 relie par exemple le processeur cryptographique 102 uniquement à la mémoire 104. Autrement dit, aucun composant autre que le processeur 102 et la mémoire 104 n'est relié au bus 106.

A titre d'exemple, la mémoire non volatile 216 contient des codes de démarrage chiffrés et les clefs de chiffrement sont, quant à elles, stockées, dans la mémoire 104. Dans certains cas, la valeur de niveau TIL est incrémentée lors des étapes du démarrage du dispositif de traitement, et les clefs de chiffrement permettent le déchiffrement des codes démarrage. Par exemple, à chaque démarrage du dispositif de traitement, une valeur de niveau TIL est initialisée par le compteur monotone 204 et est transmise à l'interface de sélection de la mémoire 104. Le processeur cryptographique 102 transmet à l'interface de sélection 206 les valeurs d'index d'une ou plusieurs premières clefs de chiffrement associées à un ou plusieurs premiers code de démarrage chiffrés associés à la valeur initiale du niveau TIL. Les premières clefs sont transmises au processeur cryptographique 102 par l'intermédiaire du bus dédié 106 ou sont stockées dans le registre 212 et transmises au processeur cryptographique 102 par l'intermédiaire du bus 214. Les premiers codes de démarrage chiffrés sont également transmis au processeur cryptographique 102 par l'intermédiaire du bus 214. Les codes de démarrage déchiffrés sont alors envoyés vers le processeur générique 210 par l'intermédiaire du bus 214. Dans un exemple, le processeur 210 exécute les codes de démarrage déchiffrés et ordonne l'incrémentation du compteur monotone, qui génère une nouvelle valeur de comptage, supérieure à la valeur de comptage initiale. D'autres codes de démarrage chiffrés associés aux prochaines valeurs de niveau TIL peuvent être déchiffrés et exécutés de la même manière que les premiers codes décrits ci-dessus.

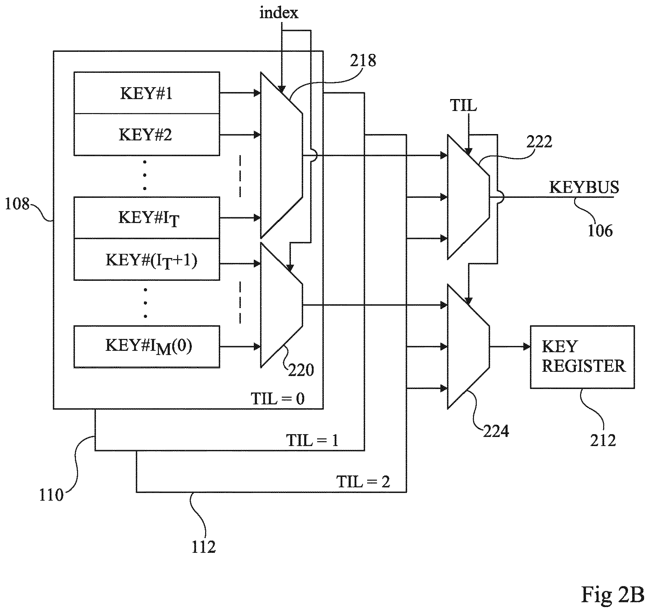

La figure 2B représente un exemple de réalisation de la mémoire 104 et en particulier de l'interface de sélection 206.

Dans l'exemple illustré par la figure 2B, la première zone 108 contient un premier ensemble de I_{M}(0) clefs de chiffrement associées au niveau TIL 0. Chaque clef est identifiée par une valeur d'index allant de 1 à *I_{M}*(0)*.* L'interface de sélection 206 comprend par exemple deux multiplexeurs 218 et 220, permettant la sélection d'une clef sur la base de la valeur d'index. Chacun de ces multiplexeur 218, 220 reçoit donc, comme entrée de commande, la valeur d'index transmise par exemple par le processeur cryptographique 102. Le multiplexeur 218 est configuré pour diriger les clefs vers le bus dédié (KEYBUS) 106, tandis que le multiplexeur 220 est configuré pour diriger les clefs vers le registre (KEY REGISTER) 212. Dans l'exemple de la figure 2B, un sous ensemble de clefs, qui sont identifiées par les valeurs d'index allant de 0 à une valeur *I_{T}* sont fournies aux entrées de données du multiplexeur 218, et un sous ensemble de clefs, identifiées par les valeurs d'index allant de *I_{T} +* 1 à *I_{M}*(0) dans l'exemple de la figure 2B, sont fournies aux entrées de données du multiplexeur 220.

La deuxième zone 110 contient un deuxième ensemble de I_{M}(1) clefs de chiffrement (non représentées en figure 2B) associées au niveau TIL 1. De même, la troisième zone 112 contient un troisième ensemble de I_{M}(2) clefs de chiffrement (non représentées en figure 2B) associées au niveau TIL 2. L'interface de sélection 206 comprend par exemple, en outre, pour chaque zone 110 et 112, deux multiplexeurs (non représentés en figure 2B), dont le fonctionnement est similaire à celui des multiplexeurs 218 et 220, pour diriger les clefs correspondantes de chaque zone 110, 112.

L'interface de sélection 206 comprend par exemple deux autres multiplexeurs 222 et 224, communs pour toutes les zones 108, 110, 112, et permettant la sélection d'une clef sur la base de la valeur de niveau TIL. Chacun de ces multiplexeur 222, 224 reçoit donc, comme entrée de commande, la valeur TIL transmise par le compteur monotone 204. Le multiplexer 222 comprend, par exemple, des entrées de données couplées respectivement aux sorties des multiplexeurs 218 de chaque zone 108, 110, 112, et le multiplexeur 224 comprend, par exemple, des entrées de données couplées respectivement aux sorties des multiplexeurs 220 de chaque zone 108, 110, 112. Chaque multiplexeur 222, 224 comprend donc un nombre d'entrées de données égal au nombre de zones de mémoire, égal à trois dans l'exemple de la figure 2B. Les multiplexeurs 222 et 224 empêchent l'accès aux clefs associées à une valeur de TIL non active. De plus, le multiplexeur 222 est configuré pour diriger les clefs vers le bus dédié 106, tandis que le multiplexeur 224 est configuré pour diriger les clefs vers le registre 212.

Dans un exemple, la valeur *I_{T}* est différente sur chaque zone 108, 110 et 112. Dans un autre exemple, la valeur *I_{T}* est une valeur fixée.

D'autres modes de réalisation de la mémoire 104 sont possibles. Par exemple, au lieu de prévoir les deux multiplexeurs 218 et 220, un seul multiplexeur peut être utilisé pour sélectionner une clef sur la base de l'index, et les clefs de chaque zone sont en outre associées à des drapeaux indiquant si leur transmission se fait par l'intermédiaire du bus 106 ou si elles sont à stocker dans le registre 212. Par exemple, un démultiplexeur est prévu afin de diriger les clefs sélectionnées soit vers le bus dédié 106, soit vers le registre 212, sur la base du drapeau.

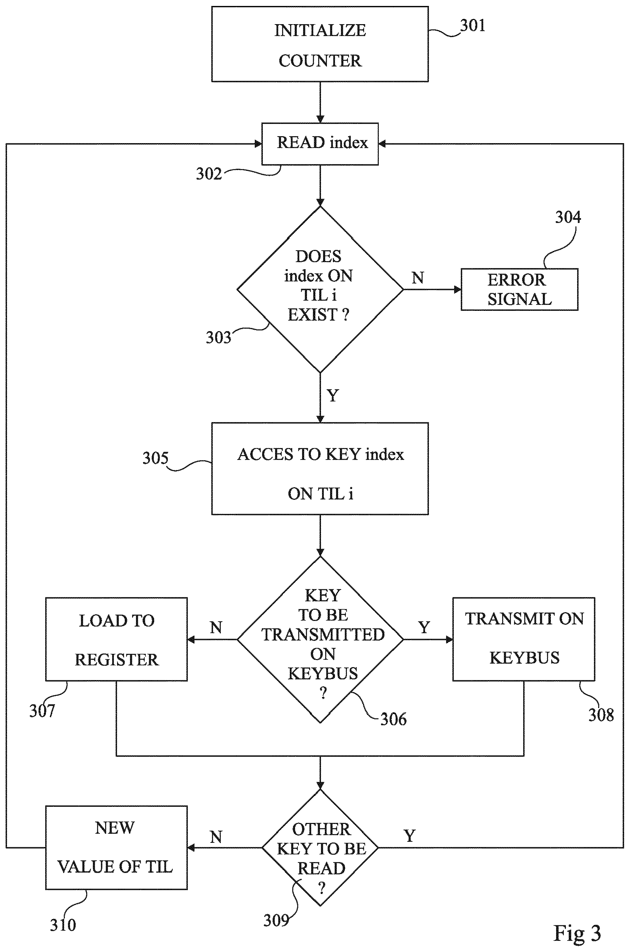

La figure 3 est un organigramme représentant des opérations d'un procédé de transmission de clefs vers un processeur cryptographique selon un exemple de réalisation de la présente description. Ce procédé est implémenté par exemple par le processeur cryptographique 102 et l'interface de sélection 206 de la mémoire 104.

Dans une étape 301 (INITIALIZE COUNTER), le compteur monotone est initialisé à une valeur initiale, étant un entier naturel. Dans l'exemple dans lequel la valeur de comptage est stockée de manière volatile, chaque mise sous tension du dispositif de traitement engendre l'initialisation de la valeur de comptage, par exemple à 0. Dans un autre exemple dans lequel la valeur de comptage est stockée sur des éléments de mémorisation non volatile, chaque mise sous tension du dispositif de traitement engendre le remplacement de la valeur de comptage courante par une nouvelle valeur de comptage initiale, par exemple 0. L'étape 301 a par exemple lieu suite à un démarrage du dispositif de traitement 102.

Dans certains modes de réalisation, la valeur de comptage initiale générée suite à une mise sous tension peut varier selon le contexte du dispositif de traitement. Par exemple, une ou plusieurs valeurs de comptage correspondent à des niveaux d'isolation réservés au fabricant du dispositif 202, et une mise sous tension effectuée par une entité intermédiaire entre le fabriquant et l'utilisateur final et/ou par l'utilisateur final déclenchera une valeur de comptage supérieure à ces valeurs de comptage réservées. Par exemple, si la valeur de comptage 0 est réservée au fabricant, une mise sous tension effectuée par une entité intermédiaire entre le fabriquant et l'utilisateur final et/ou par l'utilisateur final déclenchera une valeur de comptage égale à 1 et le ou les codes de démarrage ainsi que les données sensibles associées au niveau d'isolement 0 seront inaccessibles. Par exemple, en sortie de fabrication, un ou plusieurs bits stockés de façon non volatile dans la mémoire 104, ou dans une autre mémoire, sont programmés afin d'assurer que la valeur de comptage est initialisée à 1. Dans un exemple, ces bits correspondent à une valeur protégée par signature indiquant la valeur de comptage initiale à appliquer. Par exemple, la signature est générée sur la base d'une clef de chiffrement, et peut par exemple correspondre à une signature MAC (de l'anglais "Message Authentication Code"). Cette valeur est par exemple fournie au compteur monotone 204 par le bus 214. Il est alors possible, en changeant la valeur protégée par signature, de faire démarrer le compteur monotone 204 à nouveau à 0 (ou à une autre valeur) pendant la vie du dispositif.

Dans une étape 302 (READ index), la valeur d'index par exemple stockée dans le registre du processeur cryptographique 102 est lue et transmise à l'interface 206. Dans une étape 303 (DOES index ON TIL i EXIST ?) l'interface de sélection 206 vérifie qu'une clef chiffrée stockée dans la mémoire 104 en association avec la valeur de niveau de TIL et identifiée par la valeur d'index existe bien. Si ce n'est pas le cas (branche N), le procédé se termine dans une étape 304 (ERROR SIGNAL) dans laquelle le dispositif signale à l'utilisateur qu'une erreur a lieu, par exemple à l'aide d'un signal sonore, ou par l'affichage d'un message textuel.

Dans le cas où une clef chiffrée associée à la valeur de niveau de TIL courante et identifiée par la valeur d'index existe bien (branche Y), le procédé continu dans une étape 305 (ACCES TO KEY index ON TIL i), postérieure à l'étape 303. Dans l'étape 305, la clef identifiée par la valeur index et associée au niveau TIL i est sélectionnée. Par exemple, la sélection est faite par le circuit décrit en relation avec la figure 2B.

Dans une étape 306 (KEY TO BE TRANSMITTED ON KEYBUS?), est déterminé si la clef sélectionnée est à transmettre au processeur cryptographique 102 par l'intermédiaire du bus dédié 106. Par exemple, l'étape 306 fait suite à la sélection selon la valeur de l'index faite par le circuit décrit en relation avec la figure 2B, les index 1 à *I_{T}* de la zone 108 étant réservés pour transmission par le bus 106, et les index *I_{T}* + 1 à *I_{M}*(0) étant réservés pour stockage dans le registre 212. Dans un autre exemple, la décision est prise sur la base d'un drapeau ou selon tout autre moyen permettant d'indiquer vers quel composant (le bus dédié 106 ou le registre 212) la clef sélectionnée devrait être envoyée.

Si la clef sélectionnée est à transmettre par l'intermédiaire du bus dédié 106 (branche Y) le procédé continue dans une étape 308 (TRANSMIT ON KEYBUS) dans laquelle la clef est envoyée au processeur cryptographique par le bus dédié 106. Dans le cas contraire (branche N en sortie de l'étape 306), le procédé continue dans une étape 307 (LOAD TO REGISTER) dans laquelle la clef sélectionnée est stockée dans le registre 212. Une fois stockée dans le registre 212, la clef sélectionnée est accessible par le processeur cryptographique par l'intermédiaire du bus 214.

Dans une étape 309 (OTHER KEY TO BE READ?) faisant suite à l'étape 307 ou à l'étape 308, il est vérifié, par exemple par le processeur générique 210 ou par l'interface de sélection 206 si d'autres clefs de chiffrement chiffrées et associées à la valeurs de niveau de TIL courante sont à transmettre au processeur cryptographique. Si c'est le cas (branche Y), une nouvelle valeur d'index est stockée dans le registre du processeur cryptographique et le procédé reprend à l'étape 302. Si toutes les clefs chiffrées associées à la valeur de TIL courante ont été déchiffrées (branche N), une nouvelle valeur de niveau de TIL est générée par incrémentation du compteur monotone dans une étape 310 (NEW VALUE OF TIL). Par exemple, la valeur de niveau TIL est incrémentée par une instruction des codes de fonctionnement exécutée par le processeur générique 210. Lorsqu'une nouvelle valeur de niveau TIL est transmise par le compteur monotone 204 vers l'interface de sélection 206, le procédé reprend à l'étape 302.

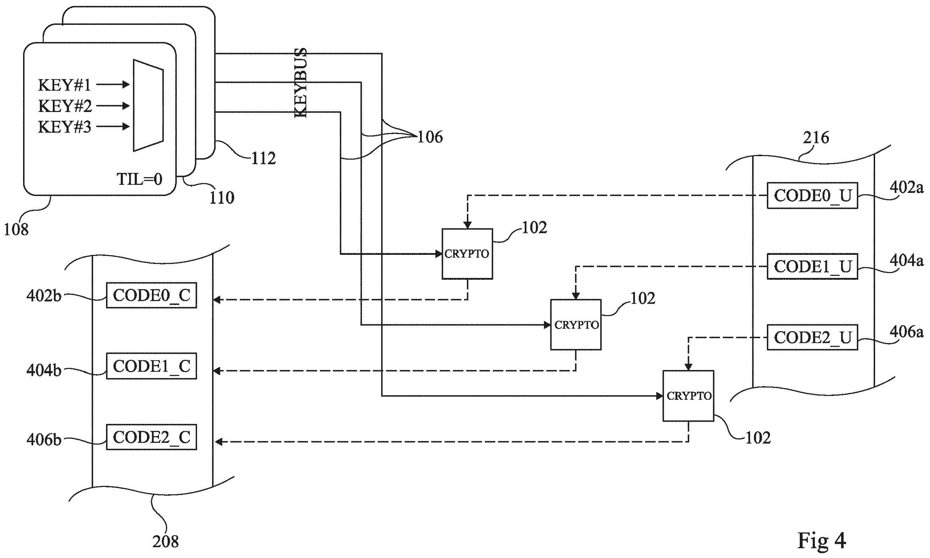

La figure 4 illustre un système de déchiffrement de données chiffrées selon un mode de réalisation de la présente description. Par exemple, les données chiffrées sont stockées dans la mémoire non volatile 216 du dispositif de traitement 102, et les données déchiffrées sont stockées dans la mémoire 208, bien qu'il soit possible que les données chiffrées et/ou les données déchiffrées soient stockées dans une autre mémoire.

Dans l'exemple illustré par la figure 4, la mémoire non volatile 216 comprend trois codes chiffrés, par exemple des codes de démarrage. Par exemple, le compteur monotone est initialisé à la valeur de niveau TIL 0 et cette valeur de niveau TIL est transmise à l'interface de sélection 206. Le processeur générique 210 ordonne par exemple le déchiffrement pour exécution d'un premier code chiffré 402a (CODEO_U). La valeur de niveau TIL à laquelle est associée l'ensemble de clefs de déchiffrement du premier code chiffré 402a est par exemple la valeur 0. Le premier code chiffré 402a est envoyé vers le processeur cryptographique 102, par l'intermédiaire du bus 214 sous contrôle du processeur générique 210, tel qu'indiqué par une flèche en pointillée dans la figure 4. Lors du déchiffrement du premier code chiffré 402a, le processeur cryptographique 102 transmet, par exemple, les valeurs d'index des clefs de chiffrement (des clefs KEY#1, KEY#2 et KEY#3 dans l'exemple de la figure 4) associées à la valeur de niveau TIL 0 vers l'interface de sélection 206 selon le rythme de l'opération de déchiffrement. Ces clefs de la zone 108 de la mémoire 104 sont alors transmises par l'interface de sélection 206 vers le processeur cryptographique 102 par l'intermédiaire du bus dédié 106. Le processeur cryptographique 102 déchiffre le premier code chiffré 402a et sort un premier code déchiffré 402b (CODE0_C) qu'il stocke, par exemple par l'intermédiaire du bus 214, dans la mémoire RAM 208. Dans un exemple, le code déchiffré 402b comprend, ou se termine sur, une instruction d'incrémentation du compteur monotone. Le processeur générique 210 ordonne donc l'incrémentation de la valeur de comptage lors de l'exécution de cette instruction, et le compteur monotone 204 transmet une nouvelle valeur de niveau TIL, par exemple 1, à l'interface de sélection 206.

Par exemple, le processeur générique 210 ordonne le déchiffrement d'un deuxième code chiffré 404a (CODE1_U), par exemple un code de démarrage. De même que pour le premier code chiffré 402a, le deuxième code chiffré 404a est transmis au processeur cryptographique 102, par exemple par l'intermédiaire du bus 214, et l'opération de déchiffrement se déroule de manière similaire que pour le code chiffré 402a, sur la base des clefs stockées dans la zone 110 de la mémoire 104. Le processeur cryptographique 102 déchiffre le deuxième code chiffré 404a et sort un deuxième code déchiffré 404b (CODE1_C) qu'il stocke, par exemple par l'intermédiaire du bus 214, dans la mémoire RAM 208. Dans un exemple, le code déchiffré 404b comprend, ou se termine sur, une instruction d'incrémentation du compteur monotone 204. Le processeur générique 210 ordonne donc l'incrémentation de la valeur de comptage lors de l'exécution de cette instruction, et le compteur monotone 204 transmet une nouvelle valeur de niveau TIL, par exemple 2, à l'interface de sélection 206.

Par exemple, le processeur générique 210 ordonne le déchiffrement d'un troisième code chiffré 406a (CODE2_U), par exemple un code de démarrage. De même que pour les premier et deuxième codes chiffrés 402a et 404a, le troisième code chiffré 406a est transmis au processeur cryptographique 102, par exemple par l'intermédiaire du bus 214, et l'opération de déchiffrement se déroule de manière similaire que pour le code chiffré 402a, sur la base des clefs stockées dans la zone 112 de la mémoire 104. Le processeur cryptographique 102 fournit un troisième code déchiffré 406b (CODE2_C) et le stocke dans la mémoire RAM 208. Dans un exemple, le code déchiffré 406b comprend, ou se termine sur, une instruction d'incrémentation du compteur monotone 204. Le processeur générique 210 ordonne donc l'incrémentation de la valeur de comptage lors de l'exécution de cette instruction. Le compteur monotone 204 transmet la nouvelle valeur de niveau TIL, par exemple 3, à l'interface de sélection 206. Comme cette valeur ne correspond à aucune clef de déchiffrement de la mémoire 104, l'interface de sélection 206 empêche alors tout accès aux clefs stockées dans la mémoire 104.

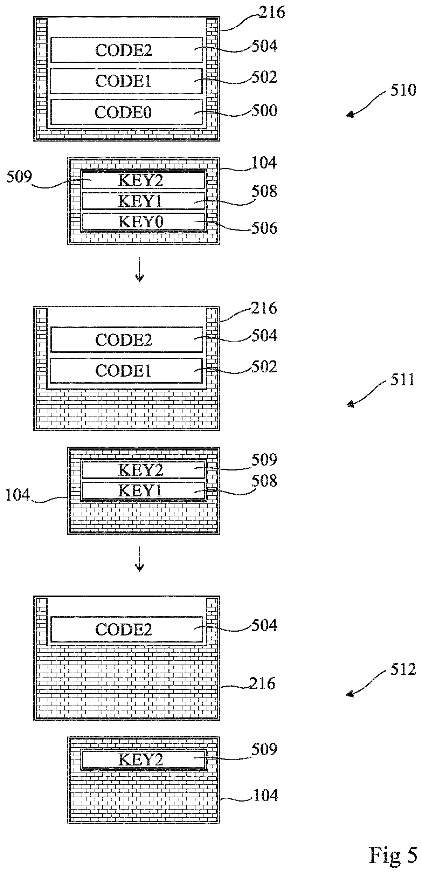

Les figures 5 à 7 illustrent un mode de réalisation de la présente description dans lequel les données chiffrées sont des codes de démarrage et/ou des clefs de chiffrement associées à ces codes, et la valeur de niveau TIL est incrémentée à la fin de chaque étape de la séquence de démarrage. Chaque valeur de niveau TIL correspond en outre à un ou plusieurs codes de démarrage associés à chaque étape de démarrage, ces codes étant rendus inaccessibles lorsque la valeur de niveau TIL courante est supérieure à la valeur de niveau TIL leur étant associée.

Dans l'exemple de la figure 5, des zones mémoire 506, 508 et 509 stockent des données sensibles associées respectivement à des codes de démarrage 500, 502 et 504 stockés dans la mémoire non volatile 216. Les zones 506, 508 et 509 sont par exemple des zones distinctes des zones 500, 502 et 504, mais restent associées à un niveau d'isolement correspondant à celui des codes de démarrage auxquels les données sont liées. Ces données sensibles incluent par exemple une ou plusieurs clefs de chiffrement stockées dans chaque zone 506, 508 et 509 et chacune de ces zones est contenue dans la mémoire non volatile 104. Selon un autre mode de réalisation, chaque zone 506, 508 et 509 est une sous-zone de la zone correspondante 500, 502 et 504.

Lors d'une première étape 510 de démarrage du dispositif de traitement illustrée en haut de la figure 5, la valeur de comptage courante est par exemple égale à 0. Dans l'exemple de la figure 5, un niveau d'isolement 0 est associé à un premier code (CODE0) ainsi qu'à des premières données sensibles (KEY0). Un circuit de contrôle d'accès à la mémoire 216 (non représenté) et l'interface de sélection 206 sont configurés, par exemple, pour que ce premier code et ces premières données soient exclusivement accessibles lorsque la valeur de comptage courante est égale à 0. Cependant, lors de l'étape 510, le circuit de contrôle d'accès et l'interface de sélection autorisent par exemple l'accès à toutes les zones mémoire 500, 502 et 504, ainsi qu'à toutes les zones 506, 508 et 509. En effet, dans certains cas, afin par exemple d'anticiper des étapes suivantes dans le procédé de démarrage, un ou plusieurs autres codes de démarrage (CODE1, CODE2) sont accessibles à la lecture pendant l'étape 510.

Par exemple, une fois que le premier code CODE0 est exécuté, le processeur générique 210 commande une première incrémentation de la valeur de comptage courante par le compteur monotone 204. Par exemple, le premier code comprend une commande demandant l'incrémentation du compteur. Cette commande est par exemple transmise vers un registre de commande (non illustré) du compteur monotone.

Après cette première incrémentation, la valeur de comptage courante du compteur monotone 204 est par exemple égale à 1, correspondant à une deuxième étape 511 du démarrage. Le circuit de contrôle d'accès ainsi que l'interface de sélection reçoivent la nouvelle valeur de comptage courante, et sont configurés pour empêcher, sur la base de cette valeur de comptage supérieure à 0, tout accès au premier code ainsi qu'aux premières données qui sont associées au niveau d'isolation 0. Autrement dit, les zones mémoires 500 et 506 sont verrouillées sur la base de toute valeur de comptage strictement supérieure à 0.

Le niveau d'isolation 1 est associé à un deuxième code (CODE1) contenu dans la zone 502 ainsi qu'à des deuxièmes données (KEY1) contenues dans la zone 508. Selon un mode de réalisation, un troisième code (CODE2), par exemple associé au niveau d'isolation 2 et contenu dans la zone 504, est accessible pour lecture sur la base de la valeur de comptage courante égale à 1.

Par exemple, une fois que le deuxième code CODE1 est exécuté, le processeur générique 210 commande une deuxième incrémentation de la valeur de comptage courante par le compteur monotone 204. Par exemple, après cette deuxième incrémentation, la valeur de comptage courante du compteur monotone 204 est égale à 2, correspondant à une troisième étape 512 du démarrage. Le niveau d'isolation 2 est associé au troisième code CODE2 ainsi qu'à des troisièmes données (KEY2). Le circuit de contrôle d'accès et l'interface de sélection 206 reçoivent la nouvelle valeur de comptage, et sont configurés pour empêcher, sur la base de cette valeur de comptage supérieure à 1, tout accès au premier et au deuxième codes ainsi qu'aux premières et aux deuxièmes données qui sont associées aux niveaux d'isolation inférieurs ou égaux à 1.

Selon un mode de réalisation, lorsque le dernier code de démarrage est exécuté, par exemple le troisième code de démarrage, le processeur générique 210 commande une troisième incrémentation de la valeur de comptage courante par le compteur monotone. Le circuit de contrôle d'accès et l'interface de sélection 206 verrouillent alors tout accès aux premier, deuxième et troisième codes de démarrage ainsi qu'aux premières, deuxièmes et troisièmes données.

Selon un autre mode de réalisation, lorsque le dernier code de démarrage est exécuté, par exemple le troisième code de démarrage, la valeur de comptage courante n'est pas incrémentée par le compteur monotone 204 et l'accès au troisième code de démarrage ainsi qu'aux troisièmes données reste autorisé par le circuit de contrôle d'accès.

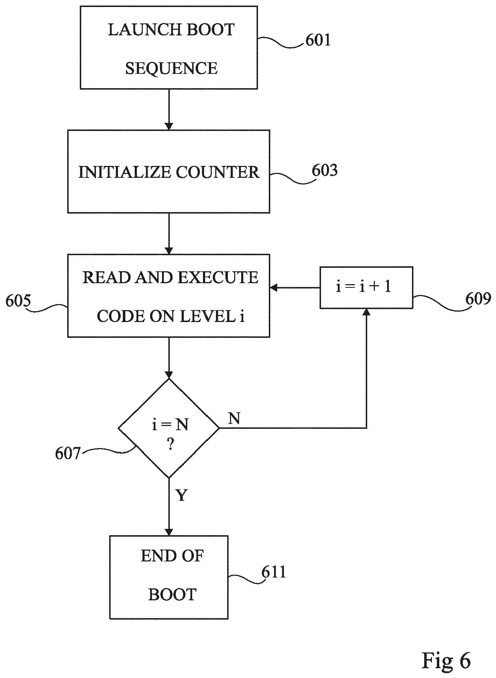

La figure 6 est un organigramme représentant des opérations d'un procédé de démarrage sécurisé d'un dispositif de traitement selon un exemple de réalisation de la présente description. Ce procédé est mis en œuvre par exemple par le processeur générique 210, le compteur monotone 204 et le circuit de contrôle d'accès et l'interface de sélection 206, du dispositif de traitement de la figure 2.

Dans une étape 601 (LAUNCH BOOT SEQUENCE) le dispositif de traitement 202 démarre. Dans un exemple il s'agit du premier démarrage du dispositif 202 après sa production. Dans un autre exemple il s'agit d'un démarrage effectué par une entité intermédiaire entre le fabriquant du dispositif 202 et son utilisateur final. Encore dans un autre exemple, il s'agit d'un démarrage dit de fonctionnement du dispositif électronique 200 effectué par l'utilisateur final.

Dans une étape 603 (INITIALIZE COUNTER), postérieure à l'étape 601, le compteur monotone est initialisé à une valeur initiale, étant un entier naturel. Dans l'exemple dans lequel la valeur de comptage est stockée de manière volatile, chaque mise sous tension du dispositif de traitement engendre l'initialisation de la valeur de comptage, par exemple à 0 ou à 1. Dans un autre exemple dans lequel la valeur de comptage est stockée sur des éléments de mémorisation non volatile, chaque mise sous tension du dispositif de traitement engendre le remplacement de la valeur de comptage courante par la valeur de comptage initiale, par exemple égale à 0 ou à 1.

Dans certains modes de réalisation, la valeur de comptage initiale générée suite à une mise sous tension peut varier selon l'état, ou contexte, du dispositif de traitement 102. Par exemple, une ou plusieurs valeurs de comptage correspondent à un ou plusieurs niveaux d'isolation réservés à une phase de paramétrisation initiale du dispositif 102, comprenant par exemple l'installation de micrologiciels. Les données et/ou codes associés à ces niveaux d'isolement sont par exemple utilisés pour cette paramétrisation initiale.

Par exemple, suite à la fabrication, le dispositif de traitement 102 a le contexte "vierge" et la valeur de comptage initiale est égale à une valeur réservée à la paramétrisation, telle que 0. Une fois la paramétrisation achevée, le contexte du dispositif devient par exemple "paramétrisation achevée". Avec ce nouveau contexte, la mise sous tension du dispositif 102, effectuée par exemple par une entité intermédiaire entre le fabriquant et l'utilisateur final et/ou par l'utilisateur final, déclenchera alors une valeur de comptage supérieure à la valeur de comptage réservée, et par exemple égale à 1. Le ou les codes de démarrage, ainsi que les données sensibles, associées au niveau d'isolement correspondant à la valeur de comptage réservée seront, par conséquent, inaccessibles.

Par exemple, le contexte du dispositif est détecté par la présence d'une tension sur une broche de démarrage du dispositif, cette tension étant appliquée par exemple par l'ajout d'un cavalier (en anglais "jumper") entre la broche de démarrage et une autre broche à une tension d'alimentation. A titre complémentaire ou alternatif, le contexte du dispositif est détecté par la valeur d'un ou plusieurs bits stockés de façon non volatile, et de manière protégée, dans la mémoire 104, ou dans une autre mémoire.

Dans un exemple, le processeur générique 110 est agencé pour détecter le contexte du dispositif 102 lors de la mise sous tension du dispositif 102, et pour configurer en conséquence la valeur de comptage initiale du compteur monotone 106. Dans un autre exemple, le compteur monotone 106 est agencé pour détecter lui-même le contexte du dispositif 102 et pour configurer lui-même sa valeur de comptage initiale, lors de la mise sous tension du dispositif 102.

Dans une étape 605 (READ AND EXECUTE CODE ON LEVEL i), postérieure à l'étape 603, les données et les codes de démarrage associés au niveau d'isolement i sont lus par le processeur générique 210 et les codes de démarrage associés au niveau d'isolement i sont exécutés. Une fois les codes du niveau i exécutés, le processeur générique 210 compare, dans une étape 607 (i=N ?) la valeur de comptage i à la valeur N, N étant la valeur de comptage associée à la dernière étape dans la séquence de démarrage, autrement dit les codes de démarrage du niveau d'isolement N sont les derniers à être exécutés selon le mode de réalisation de la présente description. Par exemple, dans l'exemple de la figure 5, N est égale à 2. Si i n'est pas égal à N (branche N), le procédé continue dans une étape 609 (i=i+1) dans laquelle le processeur générique déclenche l'incrémentation de la valeur de comptage. Par exemple, la valeur de comptage passe de i à i+1. Il est également possible que l'incrémentation augmente la valeur i de plusieurs unités. Le procédé reprend alors à l'étape 605.

Dans le cas où, suite à l'étape de comparaison 607, la valeur de comptage est égale à N (branche Y), le procédé se termine sur une étape 611 (END OF BOOT) dans laquelle le démarrage du dispositif de traitement se termine. Selon un mode de réalisation, la valeur de comptage courante reste égale à N suite à l'étape 611. Selon un autre mode de réalisation, la valeur de comptage est incrémentée lors de l'étape 611, et la valeur de comptage courante devient égale à N+1. Dans ce deuxième cas, le circuit de contrôle d'accès et l'interface de sélection sont configurés pour empêcher tout accès à tous les codes de démarrage sur la base de cette valeur de comptage.

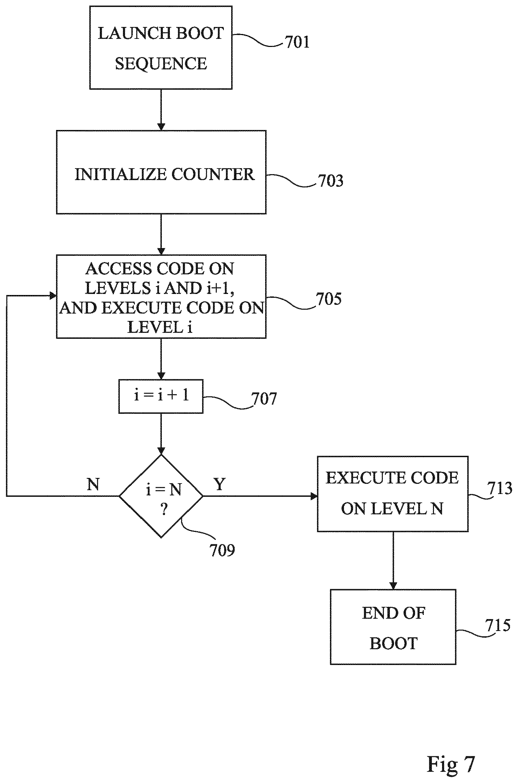

La figure 7 est un organigramme représentant des opérations d'un procédé de démarrage sécurisé d'un dispositif de traitement selon un autre exemple de réalisation de la présente description. Ce procédé est mis en œuvre par exemple par le processeur générique 210, le compteur monotone 204 et le circuit de contrôle d'accès et l'interface de sélection 206, du dispositif de traitement de la figure 1.

Les étapes 701 et 703 sont similaires aux étapes 601 et 603 de la figure 6, et ne vont pas être décrites à nouveau en détail.

Dans une étape 705 (ACCESS CODE ON LEVELS i AND i+1 EXECUTE CODE ON LEVEL i), postérieure à l'étape 703, les données et les codes de démarrage associés aux niveaux d'isolement i+1 sont accessibles par le processeur générique 210 et le ou les codes de démarrage associés au niveau d'isolement i sont exécutés.

Dans un exemple, les données ou codes associés au niveau d'isolement i contiennent une ou plusieurs clefs de chiffrement, chiffrées ou non, qui seront utilisées lors de l'exécution d'un ou plusieurs codes associés au niveau d'isolement i+1. Ainsi, un accès pour écriture est par exemple autorisé sur la ou les zones mémoire associées au niveau d'isolement i+1 afin de provisionner les clefs aux codes associés au niveau d'isolement i+1.

Dans un autre exemple, les codes associés au niveau d'isolement i contiennent des instructions visant à vérifier l'intégrité des données et/ou codes associés au niveau d'isolement i+1. Ainsi, un accès en lecture de la ou des zones mémoire associées au niveau d'isolement i+1 est autorisé afin d'effectuer cette vérification.

Dans une étape 707 (i=i+1), postérieure à l'étape 705, la valeur de comptage est incrémentée. Par exemple la valeur de comptage passe de i à i+1. Dans d'autres exemples, l'incrémentation augmente i de plusieurs unités.

Dans une étape 709 (i=N ?) le processeur générique 210 compare la valeur de comptage i à la valeur N, où N est défini comme décrit en relation avec l'étape 607 de la figure 6. Si la valeur i n'est pas égale à N (branche N) le procédé revient à l'étape 705.

Dans le cas où, lors de à l'étape de comparaison 709, la valeur de comptage est égale à N (branche Y), le procédé continue sur une étape 713 (EXECUTE CODE ON LEVEL N) dans laquelle le ou les codes de démarrage associés au niveau d'isolation N sont exécutés.

Le démarrage du dispositif de traitement se termine par une étape 715 (END OF BOOT), qui est similaire à l'étape 611 de la figure 6, et n'est pas décrite à nouveau en détail.

Le procédé dont la mise en œuvre est présentée par la figure 7 permet une lecture des codes de démarrage en décalé. En effet les codes de démarrage associés à un niveau d'isolement sont lus lorsque la valeur de comptage est inférieure à la valeur du niveau. Cela permet un gain de temps par rapport à la mise en œuvre du procédé présenté dans la figure 6.

Un avantage des modes de réalisation décrits est que les clefs de chiffrement sont physiquement inaccessibles par le processeur générique non sécurisé.

Un autre avantage des modes de réalisation décrits est que la sélection des clefs de chiffrement repose sur une implémentation matérielle d'un compteur monotone matériel. Les clefs de chiffrement bénéficient alors d'une protection supplémentaire car elles ne sont accessibles que pour une valeur de niveau TIL donnée.

Un autre avantage des modes de réalisations décrits est qu'ils sont facilement adaptables à plusieurs architectures de démarrage.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, différents types de processeurs peuvent être utilisés, l'implémentation de l'interface de sélection peut varier ainsi que le nombre de niveaux d'isolement.

## Revendications

1. Procédé de réalisation d'une opération cryptographique, le procédé comprenant :
- la génération d'une première valeur de comptage par un compteur monotone (204) d'un dispositif de traitement (202) ;
- la transmission par le compteur monotone de la première valeur de comptage à une mémoire (104) du dispositif de traitement ;
- la sélection d'une première clef de chiffrement dans la mémoire sur la base de la première valeur de comptage ; et
- la mise à disposition de la première clef de chiffrement sélectionnée à un processeur cryptographique (102).

2. Procédé selon la revendication 1, dans lequel la sélection de la première clef de chiffrement est réalisée par une interface de sélection (206) configurée pour empêcher l'accès à une ou plusieurs autres clefs de chiffrement stockées dans la mémoire en association avec d'autres valeurs de comptage du compteur monotone (204).

3. Procédé selon la revendication 1 ou 2, dans lequel la première clef de chiffrement est sélectionnée en outre par un premier index.

4. Procédé selon la revendication 3, comprenant en outre :
- la génération d'une deuxième valeur de comptage par le compteur monotone (204) du dispositif de traitement (202) ;
- la transmission par le compteur monotone de la deuxième valeur de comptage à la mémoire (104) du dispositif de traitement ;
- la sélection d'une deuxième clef de chiffrement dans la mémoire sur la base de la deuxième valeur de comptage et du premier index ; et
- la mise à disposition de la deuxième clef de chiffrement sélectionnée au processeur cryptographique (102).

5. Procédé selon l'une quelconque des revendications 1 à 4, dans lequel la mémoire (104) est configurée de sorte que l'accès à la première clef de chiffrement ne soit pas autorisé sur la base d'une valeur de comptage supérieure à la première valeur de comptage.

6. Procédé selon l'une quelconque des revendications 1 à 5, dans lequel, la mise à disposition de la première clef de chiffrement au processeur cryptographique (102) est effectuée, sur la base d'une condition de stockage de la première clef de chiffrement, soit par le biais d'un bus (106) entre la mémoire et le processeur cryptographique, soit par le biais d'un registre (212) lisible par un processeur (210) du dispositif de traitement (202).

7. Procédé selon la revendication 6, dans lequel la condition de stockage est le fait que la première clef de chiffrement est stockée dans une première plage d'adresse.

8. Procédé selon la revendication 6, dans lequel la condition de stockage est le fait que la première clef de chiffrement est stockée dans la mémoire en association avec une première valeur d'un drapeau.

9. Procédé selon l'une quelconque des revendications 6 à 8, dans lequel le bus (106) est un bus dédié à la transmission des clefs de chiffrement entre la mémoire (104) et le processeur cryptographique (102).

10. Procédé selon l'une quelconque des revendications 1 à 9, comprenant en outre :
- la sélection d'une troisième clef de chiffrement dans la mémoire (104) sur la base de la première valeur de comptage et d'un deuxième index ; et
- la mise à disposition de la troisième clef de chiffrement sélectionnée au processeur cryptographique (102).

11. Procédé selon l'une quelconque des revendications 1 à 10, dans lequel le compteur monotone (204) est initialisé à la première valeur de comptage lors d'un premier démarrage du dispositif de traitement (202), le procédé comprenant en outre, l'initialisation du compteur monotone à la deuxième valeur de comptage lors d'un deuxième démarrage du dispositif de traitement.

12. Procédé selon la revendication 11, comprenant un autre démarrage du dispositif de traitement (202) lors duquel le compteur monotone (204) est initialisé à la première valeur de comptage si une condition d'état du dispositif est satisfaite.

13. Procédé selon la revendication 12, dans lequel la condition d'état correspond à l'état de programmation d'une zone de la mémoire (104).

14. Dispositif de traitement de données comprenant :
- un compteur monotone (204) configuré pour générer une première valeur de comptage ; et
- une mémoire (104) comprenant une interface de sélection (206), l'interface de sélection étant configurée pour :
- sélectionner une première clef de chiffrement mémorisée dans la mémoire sur la base de la première valeur de comptage ; et
- mettre à disposition la première clef de chiffrement sélectionnée à un processeur cryptographique (102).
